# EUROPEAN PATENT SPECIFICATION

(11) **EP 2 489 485 B1**
(45) Date of publication and mention of the grant of the patent: **07.01.2015**
(21) Application number: 12155263.2
(22) Date of filing: 14.02.2012
(51) Int. Cl.: B26D 7/01, B26D 3/28, A22C 17/00, B26D 1/02, B26D 7/06

(54) **Machine for slicing meat**
Maschine zum Schneiden von Fleisch in Scheiben
Appareil de coupe en tranches de viande

(30) Priority: 18.02.2011 IT RE20110009
(43) Date of publication of application: 22.08.2012
(73) Proprietor: Grasselli, Giorgio, 42020 Albinea, Reggio Emilia (IT)
(72) Inventor: Grasselli, Giorgio, 42020 Albinea, Reggio Emilia (IT)
(74) Representative: Colò, Chiara

(56) References cited:
- EP-A1- 0 849 177
- WO-A1-03/031127
- DE-A1- 4 434 364
- US-A1- 2002 104 414

## Description

The object of the present invention is a machine for cutting meat, known in the sector as a slicing machine, particularly for foodstuffs and yet more specifically for fresh meats. Such slicing machine finds useful application in the processing and packaging of fresh meats, salted meats, cured meats and other foodstuffs.

In the prior art, a slicing machine comprises a frame, to which a support for the meat to be sliced is fixed. More specifically, the meat is constrained to the support cited in such a manner that a surface with contact with the meat is pressed against the frame at a striking surface.

The slicing machine further comprises a blade that is fixed to the frame, and has the function of cutting slices of meat.

During operation of the machine, the support slides with respect to the frame, pulling the meat that is pushed against the blade. In this manner, the blade comes into contact with the meat and cuts a slice of it.

The slicing machine known in the state of the art, has an important drawback. In fact, the meat is pulled against a striking surface and, during the cutting stage, the slice tends to fray and curl up. To prevent this from happening, it is common practice to freeze the meat prior to cutting it. Disadvantageously, this causes an inevitable deterioration of the organoleptic properties of the meat intended for use as food.

In this context, the technical task underlying the present invention is to propose a slicing machine that overcomes the drawbacks of the known art as cited hereinabove.

In particular, an aim of the present invention is to make available a slicing machine that is capable of preserving the organoleptic and nutritional characteristics of the meat.

The defined technical task and the specified aims are substantially achieved by a slicing machine, comprising the technical characteristics stated in one or more of the accompanying claims.

Further characteristics and advantages of the present invention will become more apparent from the illustrative, and thus non-limiting, description of a preferred, but not exclusive, embodiment of a slicing machine, as illustrated in the accompanying drawings, in which:
- Figure 1 is a perspective view of a slicing machine according to the present invention, with some parts omitted to show others more clearly;

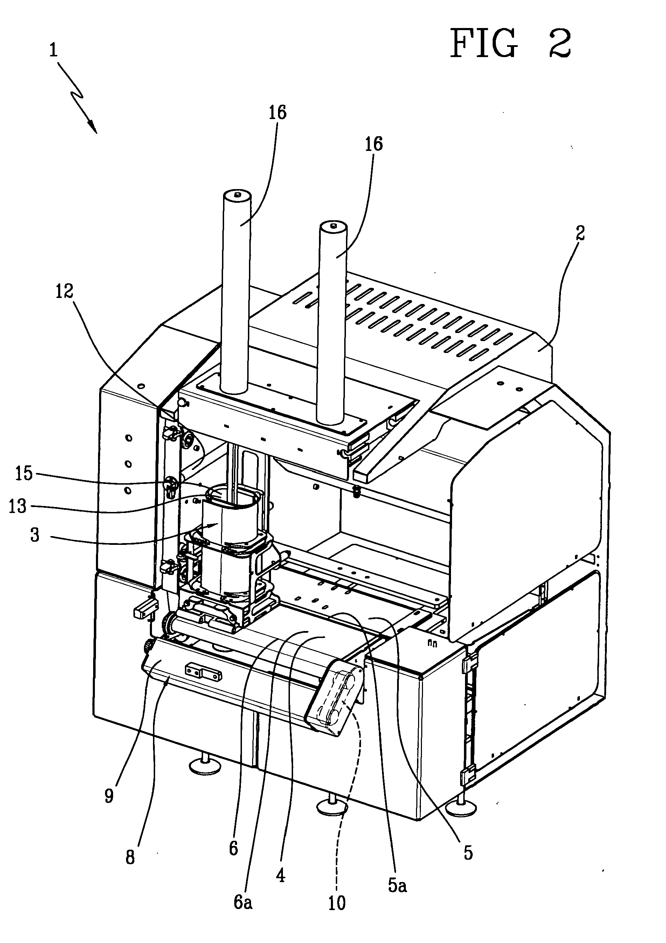

- Figure 2 is a perspective view of the slicing machine appearing in Figure 1, with some parts omitted to show others more clearly; and
- Figures 3a - 3e are schematic, lateral sectional views of the slicing machine appearing in Figures 1 and 2 in different stages of operation. With reference to the attached figures, 1 indicates a machine for cutting meat according to the present invention.

In the sector, the aforesaid machine for cutting meat is known as a slicing machine.

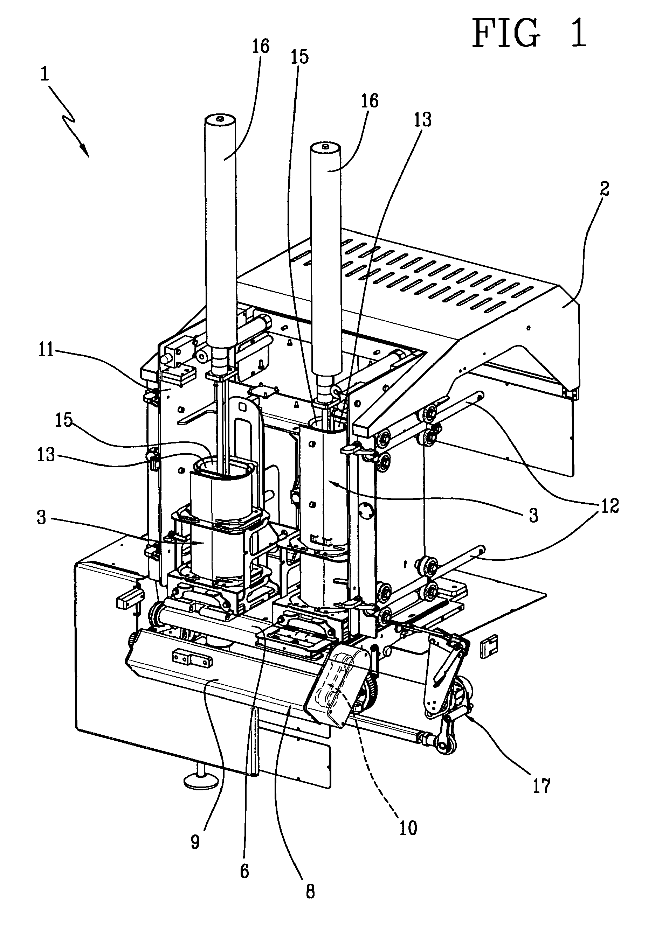

This slicing machine 1 comprises a frame 2, whereto in particular a support 3 for the meat 18 to be sliced is connected. A striking surface 4 is associated with the frame 2, so as to support the meat 18 in cooperation with the cited support 3. In further detail, the meat 18 is blocked on the cited support 3 in such a manner that one of its contact surfaces is pressed against the striking surface 4. With reference to Figure 1 in particular, the slicing machine 1 according to the present invention may comprise a plurality of supports 3. For example, the slicing machine 1 may comprise two supports 3.

The slicing machine 1 comprises a blade 5 to cut slices 19 of meat 18. In particular, this blade 5 is connected to the frame 2 and, during operation of the slicing machine 1, the blade 5 proves to be locked to this frame 2 so as not to move with respect to said frame 2. Furthermore, in the illustrated embodiment, the blade 5 has a cutting edge 5a that is in particular, rectilinear. If there is more than one support 3, as shown for example in Figure 1, all the supports 3 can share a single blade 5. In other words, the slicing machine 1 may comprise a plurality of supports 3 that are movable with respect to a single blade 5. In an unillustrated, alternative embodiment, each support 3 is associated with a respective blade 5.

In an additional variant embodiment, also not illustrated, the blade 5 may have a circular cutting edge 5a and be a rotating blade.

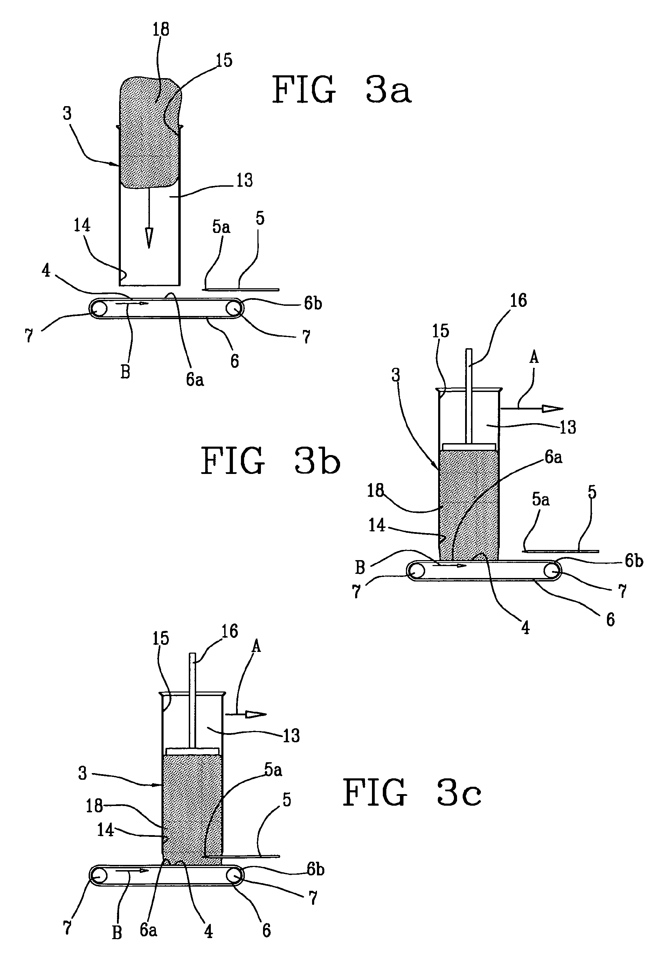

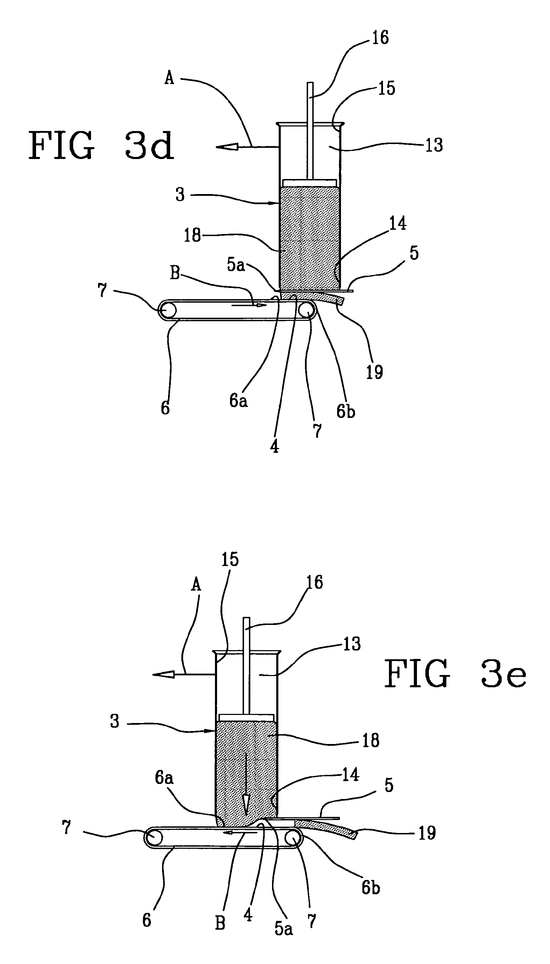

Furthermore, the present invention may be applied to any other slicing machine provided with any embodiment of a cutting blade. Advantageously, the slicing machine 1 further comprises means for adjusting 17 the distance between the blade 5 and the striking surface 4. Note that the support 3 cited above is movable with respect to the blade 5, particularly toward and away from the blade 5, so as to pull the piece of meat 18 to be sliced against the blade 5 in a forward stroke and to bring the piece of meat 18 back to an initial position preceding the cutting, in a return stroke. In further detail, the support 3 for the meat 18 is movable along a feed direction "A". With reference particularly to Figures 3b-3e, the feed direction "A" forms an angle with the edge 5a of the blade 5, and in particular is perpendicular thereto.

With reference particularly to Figure 1, the support 3 comprises a compartment 13 into which the meat 18 can be inserted. More specifically, said compartment 13 has an opening 14 facing the striking surface 4. The compartment 13 is suitable for containing a piece of meat 18 at least with respect to the movements of the support 3 towards and away from the blade 5. The presence of the compartment 13 enables the machine according to the present invention to treat pieces of meat that are substantially of any size, with no need to break up the piece of meat into parts of smaller sizes. During each return stroke of the support 3, it is in fact sufficient that the piece of meat 18 can drop down into the compartment 13 so as to be brought back into contact with the striking surface 4, so that with each forward stroke of the support 3, another slice can be cut. Therefore, this enables the machine to cut a plurality of slices in succession from the same piece of meat 18.

The support 3 further comprises a pusher member 16 insertable at least in part into the compartment 13, and in particular, facing the striking surface 4 so as to push the meat 18 against it.

In yet further detail, the compartment 13 has an additional opening 15 opposite the opening 14. During operation, the pusher member 16 is inserted into the compartment through this additional opening 15, and it pushes the meat 18 towards the opening 14 in such a manner as to block it firmly against the striking surface 4.

With reference particularly to Figures 3a-3e, the compartment 13 is tubular in shape, and extends along a longitudinal development axis substantially perpendicular to the feed direction "A" of the support 3. The opening 14 and the additional opening 15 are both arranged along the longitudinal axis of the compartment 13.

According to the present invention, the striking surface 4 is movable relative to the blade 5. More specifically, the striking surface 4 slides along a sliding direction "B" parallel to the feed direction "A" of the support. Furthermore, the striking surface 3 slides at a speed that is substantially equal to the speed of movement of the support 3. Advantageously, in this manner the striking surface 3 maintains contact with the slice 19 of meat 18 without scraping taking place.

Specifically, the striking surface 4 slides towards and away, with respect to the blade 5, in such a manner as to cooperate with the support 3 so as to bring the piece of meat 18 against the blade 5, particularly at the cutting edge 5 a thereof.

In further detail, the striking surface 4 moves alternatively between a preparation position, in which the striking surface 4 and the support 3 move a piece of meat 18 away from the blade 5, and a cutting position, in which the striking surface 4 and the support 3 push the piece of meat 18 against said blade 5 in order to cut a slice 19.

The slicing machine 1 further comprises a conveyor belt 6 connected to the frame 2, and in particular arranged between two rollers 7. In particular, this conveyor belt 6 faces the support 3, in such a manner that the piece of meat 18 rests against a portion 6a of the conveyor belt 6. Note that, according to the present invention, the striking surface 4 proves to be defined on the conveyor belt 6, particularly at the portion 6a thereof.

Advantageously, one end 6b of the conveyor belt 6 can be associated with a packaging machine (unillustrated) so as to package the slices 19 of meat 18 exiting the slicing machine 1.

In detail, the conveyor belt 6 is functionally associated with the support 3, and moves together with it. In particular, the slicing machine 1 comprises movement means 8 of the conveyor belt 6, acting on the conveyor belt in such a manner so as to synchronize movement with the previously cited support 3. In detail, the movement means 8 of the conveyor belt 6 comprises a motor 9 that is preferably electric. A drive belt 10 is operatively arranged between the motor 9 and one of the rollers 7, so as to transmit motive power from the motor 9 to the conveyor belt 6, and consequently, determine the sliding of the striking surface 4 described above.

The slicing machine 1 further comprises a carriage 11 associated with the frame 2. In detail, this carriage 11 is constrained to the frame 2 in such a manner as to slide relative thereto, in particular along tracks 12 fixed to the frame 2 and arranged along the feed direction "A" of the support 3. Moreover, the slicing machine 1 comprises movement means (not illustrated) of the carriage 11, capable of translating this carriage 11 along the tracks 12 and, as a result, moving the support 3 jointly with the carriage 11.

Note that the previously described support 3 is connected to the carriage 11, in such a manner as to be pulled by the carriage 11 along the cited feed direction "A". As illustrated particularly in Figure 1, all the supports 3 are connected to a single carriage 11. Advantageously, this simple solution allows for synchronous movement of the supports 3.

According to the present invention, the slicing machine 1 also comprises a control unit (not illustrated) that acts upon the movement means 8 of the belt 6 and upon the movement means of the carriage 11. This control unit has the function of coordinating the movement of the support 3, particularly of the carriage 11, with the sliding of the striking surface 4. The slicing machine 1 according to the present invention can be integrated in an apparatus for the processing and packaging of fresh meats. In addition to the slicing machine 1, this apparatus comprises a packaging machine (not illustrated) to package the slices 19 of meat 18 exiting the slicing machine 1. In particular, one end 6b of the conveyor belt 6 faces the packaging machine, so as to feed it slices 19 of meat 18 cut by the slicing machine 1.

The present invention achieves the proposed aim. The striking surface for the meat is also movable relative to the blade, particularly along a direction that is parallel to the feed direction of the support. For this reason, the meat is not ruined by scraping against this striking surface during the cutting procedure. As a result, it is no longer necessary to freeze the meat before slicing it.

The present invention also has an important advantage. In fact, as the meat does not scrape against the striking surface, no friction phenomena take place, which could otherwise overheat the meat, thus altering its organoleptic proprieties.

## Claims

1. A machine for cutting meat (1), comprising a frame (2); a blade (5) connected to the frame (2) to slice the meat (18); a support (3) for said meat (18) which is movable relative to said blade (5) along a feed direction (A) in order to push said meat (18) against said blade (5); a striking surface (4) for said meat (18), associated with the frame (2), so as to support the meat (18), which striking surface (4) slides relative to said blade (5) along a sliding direction (B) parallel to said feed direction (A);
**characterised in that** said support (3) comprises a compartment (13) into which the meat (18) can be inserted, said compartment (13) having an opening (14) facing said striking surface (4).

2. The machine (1) according to claim 1, **characterised in that** said striking surface (4) slides at a speed that is substantially equal to the speed of movement of the support (3) so as to maintain contact with the meat (18).

3. The machine (1) according to claim 1, **characterised in that** said striking surface (4) slides alternatively between a preparation position, in which the striking surface (4) and the support (3) move a piece of meat (18) away from the blade (5), and a cutting position, in which said striking surface (4) and said support (3) push said piece of meat (18) against said blade (5) in order to cut a slice (19).

4. The machine (1) according to claim 1, **characterised in that** it comprises a conveyor belt (6) facing said support (3), said striking surface (4) being defined on said conveyor belt (6).

5. The machine (1) according to claim 4, **characterised in that** said conveyor belt (6) is functionally associated with said support (3) and moves together with said support (3).

6. The machine (1) according to claim 1, **characterised in that** said compartment (13) is tubular in shape and has an additional opening (15), said compartment (13) extending along a longitudinal development axis substantially perpendicular to the feed direction (A) of the support (3).

7. The machine (1) according to claim 1, **characterised in that** said support (3) comprises a pusher member (16) insertable at least in part into said compartment (13) and facing said striking surface (4) so as to push the meat (18) against it.

8. The machine (1) according to claim 1, **characterised in that** it comprises means (17) for adjusting the distance between said blade (5) and said striking surface (4).

9. An apparatus for processing and packaging fresh meats, **characterised in that** it comprises a machine for cutting meat (1) according to any of the preceding claims; a packaging machine for packaging slices (19) of meat (18), said conveyor belt (6) having one end (6b) facing said packaging machine in order to feed it with slices (19) of meat (18) cut by said machine (1).

## Patentansprüche

1. Maschine zum Schneiden von Fleisch (1), umfassend einen Rahmen (2), ein Messer (5), das an den Rahmen (2) angeschlossen ist, um das Fleisch (18) in Scheiben zu schneiden, eine Halterung (3) für das Fleisch (18), die relativ zum Messer (5) entlang einer Zuführungsrichtung (A) bewegbar ist, um das Fleisch (18) gegen das Messer (5) zu drücken, eine Anschlagsfläche (4) für das Fleisch (18), die mit dem Rahmen (2) verbunden ist, sodass das Fleisch (18) gehalten wird, wobei die Anschlagsfläche (4) relativ zum Messer (5) entlang einer Verschieberichtung (B) verschoben wird, die parallel zur Zuführungsrichtung (A) verläuft; **dadurch gekennzeichnet, dass** die Halterung (3) ein Fach (13) umfasst, in das das Fleisch (18) eingefügt werden kann, wobei das Fach (13) eine Öffnung (14) aufweist, die der Anschlagsfläche (4) zugewandt angeordnet ist.

2. Maschine (1) nach Anspruch 1, **dadurch gekennzeichnet, dass** die Anschlagsfläche (4) bei einer Geschwindigkeit verschoben wird, die im Wesentlichen gleich der Geschwindigkeit der Bewegung der Halterung (3) ist, sodass der Kontakt mit dem Fleisch (18) aufrechterhalten wird.

3. Maschine (1) nach Anspruch 1, **dadurch gekennzeichnet, dass** die Anschlagsfläche (4) abwechselnd zwischen einer Vorbereitungsposition, in der die Anschlagsfläche (4) und die Halterung (3) ein Stück Fleisch (18) wegführend vom Messer (5) bewegen, und einer Schneidposition, in der die Anschlagsfläche (4) und die Halterung (3) das Stück Fleisch (18) gegen das Messer (5) drücken, um eine Scheibe (19) zu schneiden, verschoben wird.

4. Maschine (1) nach Anspruch 1, **dadurch gekennzeichnet, dass** sie ein Förderband (6) umfasst, das der Halterung (3) zugewandt angeordnet ist, wobei die Anschlagsfläche (4) auf dem Förderband (6) definiert ist.

5. Maschine (1) nach Anspruch 4, **dadurch gekennzeichnet, dass** das Förderband (6) funktionell mit der Halterung (3) verbunden ist und sich zusammen mit der Halterung (3) bewegt.

6. Maschine (1) nach Anspruch 1, **dadurch gekennzeichnet, dass** das Fach (13) rohrförmig ist und eine zusätzliche Öffnung (15) aufweist, wobei sich das Fach (13) entlang einer Längsentwicklungsachse erstreckt, die im Wesentlichen senkrecht zur Zuführungsrichtung (A) der Halterung (3) verläuft.

7. Maschine (1) nach Anspruch 1, **dadurch gekennzeichnet, dass** die Halterung (3) ein Schieberelement (16) umfasst, das mindestens teilweise in das Fach (13) eingefügt werden kann und der Anschlagsfläche (4) zugewandt angeordnet ist, sodass das Fleisch (18) gegen diese gedrückt wird.

8. Maschine (1) nach Anspruch 1, **dadurch gekennzeichnet, dass** sie Mittel (17) zum Justieren des Abstands zwischen dem Messer (5) und der Anschlagsfläche (4) umfasst.

9. Vorrichtung zum Verarbeiten und Verpacken von Frischfleisch, **dadurch gekennzeichnet, dass** sie eine Maschine zum Schneiden von Fleisch (1) nach einem der vorhergehenden Ansprüche sowie eine Verpackungsmaschine zum Verpacken von Scheiben (19) von Fleisch (18) umfasst, wobei das Förderband (6) ein Ende (6b) aufweist, das der Verpackungsmaschine zugewandt angeordnet ist, um dieser Scheiben (19) von Fleisch (18), die von der Maschine (1) geschnitten wurden, zuzuführen.

## Revendications

1. Appareil de coupe de viande (1), comprenant un châssis (2) ; une lame (5) reliée au châssis (2) pour couper en tranche la viande (18) ; un support (3) pour ladite viande (18) étant mobile par rapport à ladite lame (5) le long d'une direction de progression (A) afin de pousser ladite viande (18) contre ladite lame (5) ; une surface de contact (4) destinée à ladite viande (18), associée au châssis (2), de manière à supporter la viande (18), ladite surface de contact (4) coulisse par rapport à ladite lame (5) le long d'une direction coulissante (B) parallèle à ladite direction de progression (A) ;
**caractérisée en ce que** ledit support (3) comprend un compartiment (13) dans lequel la viande (18) peut être insérée, ledit compartiment (13) ayant une ouverture (14) faisant face à la surface de contact (4).

2. Appareil (1) selon la revendication 1, **caractérisé en ce que** ladite surface de contact (4) coulisse à une vitesse substantiellement identique à la vitesse de déplacement du support (3) de sorte à rester en contact avec la viande (18).

3. Appareil (1) selon la revendication 1, **caractérisé en ce que** ladite surface de contact (4) coulisse alternativement entre une position de préparation, dans laquelle la surface de contact (4) et le support (3) éloignent une tranche de viande (18) de la lame (5), et une position de découpe, dans laquelle ladite surface de contact (4) et ledit support (3) poussent ledit morceau de viande (18) contre ladite lame (5) afin d'en couper une tranche (19).

4. Appareil (1) selon la revendication 1, **caractérisé en ce qu'**il comprend une bande transporteuse (6) faisant face au dit support (3), ladite surface de contact (4) étant définie sur ladite bande transporteuse (6).

5. Appareil (1) selon la revendication 4, **caractérisé en ce que** ladite bande transporteuse (6) est fonctionnellement associée au dit support (3) et se déplace avec ledit support (3).

6. Appareil (1) selon la revendication 1, **caractérisé en ce que** ledit compartiment (13) possède une forme tubulaire et possède une ouverture supplémentaire (15), ledit compartiment (13) se développant le long d'un développement longitudinal substantiellement perpendiculaire à la direction de progression (A) du support (3).

7. Appareil (1) selon la revendication 1, **caractérisé en ce que** ledit support (3) comprend un poussoir (16) pouvant être inséré au moins en partie dans ledit compartiment (13) et faisant face à la surface de contact (4) de sorte à pousser la viande (18) contre celle-ci.

8. Appareil (1) selon la revendication 1, **caractérisé en ce qu'**il comprend des moyens (17) servant à régler la distance entre ladite lame (5) et ladite surface de contact (4).

9. Dispositif destiné à la transformation et à l'emballage de viandes fraîches, **caractérisé en ce qu'**il comprend un appareil de coupe de viande (1) selon l'une quelconque des revendications précédentes ; une machine de conditionnement servant à conditionner les tranches (19) de viande (18), ladite bande transporteuse (6) ayant une extrémité (6b) faisant face à ladite machine de conditionnement afin de l'alimenter avec des tranches (19) de viande (18) coupées par ledit appareil (1).
